# DEMANDE DE BREVET EUROPEEN

(11) **EP 3 372 128 A1**
(43) Date de publication de la demande: **12.09.2018**
(21) Numéro de dépôt: 18160604.7
(22) Date de dépôt: 07.03.2018
(51) Int. Cl.: A47J 37/07

(54) **DISPOSITIF DE CUISSON EN EXTERIEUR**

(30) Priorité: 10.03.2017 FR 1751992
(71) Demandeur: SEB S.A., 69130 Ecully (FR)
(72) Inventeur: GOUTHIERE, Christophe, 74150 RUMILLY (FR); BESSON, Jean-Christophe, 74600 SEYNOD (FR); TOUCHARD, Rodolphe, 74150 RUMILLY (FR)
(74) Mandataire: Soares, Luis Filipe

(57) **Abrégé**

Dispositif de cuisson en extérieur, comprenant :
- des moyens de support, agencés pour supporter des aliments à cuire,
- des moyens de chauffage, agencés pour fournir une chaleur de cuisson,
- une cuve externe formée par une paroi, recevant les moyens de support et les moyens de chauffage, et dont une surface interne de la paroi est agencée pour être exposée à des jus de cuisson,
- des moyens d'appui, agencés pour reposer sur un plan d'appui au sol, caractérisé en ce que la cuve externe présente une portion inférieure dont la paroi est inclinée par rapport au plan d'appui d'au moins 10° pour faire ruisseler les jus de cuisson et les évacuer de la cuve externe.

## Description

La présente invention concerne de manière générale un dispositif de cuisson en extérieur, autrement appelé barbecue.

Il est connu dans l'art antérieur des dispositifs de cuisson en extérieur, tel que celui divulgué dans le document WO1994003093. En contrepartie, ce dispositif présente notamment un problème de sécurité avec un risque de départ de feu élevé, en raison par exemple des parois chaudes qui peuvent être aspergées par des jus de cuisson. En effet, de tels jus de cuisson contiennent de la graisse qui peut s'enflammer spontanément si les températures des parois sont trop élevées, ce qui est le cas du dispositif de cuisson de ce document. De plus, les déflecteurs internes décrits dans ce document augmentent le risque d'inflammation, par la proximité des graisses et de la résistance chauffante, les coûts et la complexité de fabrication de ces appareils.

Un but de la présente invention est de répondre aux inconvénients du document de l'art antérieur mentionné ci-dessus et en particulier, tout d'abord, de proposer un dispositif de cuisson en extérieur qui soit simple à fabriquer, et qui limite de par sa conception les risques de départ de feu, même lors d'une utilisation prolongée où l'utilisateur fait cuire des aliments gras qui génèrent un volume important de jus de cuisson.

Pour cela un premier aspect de l'invention concerne un dispositif de cuisson en extérieur, comprenant :
- des moyens de support, agencés pour supporter des aliments à cuire,
- des moyens de chauffage, agencés pour fournir une chaleur de cuisson,
- une cuve externe formée par une paroi, recevant les moyens de support et les moyens de chauffage, et dont une surface interne de la paroi est agencée pour être exposée à des jus de cuisson,
- des moyens d'appui, agencés pour reposer sur un plan d'appui au sol, caractérisé en ce que la cuve externe est directement exposée à des jus de cuisson provenant des aliments à cuire disposés sur les moyens de support et présente une portion inférieure dont la paroi est inclinée par rapport au plan d'appui d'au moins 10° pour faire ruisseler les jus de cuisson et les évacuer de la cuve externe.

Le dispositif de cuisson selon la mise en oeuvre ci-dessus est dépourvu d'éléments entre les moyens de chauffage et la cuve externe et permet de limiter efficacement les risques de départ de feu, car la paroi de la cuve externe est éloignée des moyens de chauffage et présente une pente importante par rapport au plan d'appui (par rapport à l'horizontale donc) qui évite toute accumulation de jus de cuisson dans la cuve externe. Les graisses contenues dans les jus de cuisson sont donc évacuées par la paroi de la cuve externe et ne restent pas exposées à la chaleur des moyens de chauffage, ce qui évite toute inflammation spontanée. La portion inférieure de la cuve externe est donc inclinée par rapport à l'horizontale, mais il est entendu que la paroi du reste de la cuve externe est verticale ou très fortement inclinée. La cuve externe est donc une cuve de cuisson qui entoure les moyens de chauffage et les moyens de support.

Avantageusement, la cuve externe comprend un trou d'évacuation d'une section comprise entre 300 mm² et 2000 mm². Un tel trou d'évacuation se trouve donc à l'opposé des moyens de support et au fond de la cuve externe, à l'extrémité de la portion inférieure inclinée, pour évacuer efficacement tous les jus de cuissons guidés par la pente d'au moins 10°. Une telle surface de passage du trou permet d'évacuer même des morceaux solides, mais sa faible taille limite les échanges d'air et d'oxygène qui pourraient alimenter des flammes. En d'autres termes, la taille limitée du trou d'évacuation est choisie pour ne pas pouvoir générer d'apport suffisant en oxygène à un départ de feu. Les flammes sont donc évitées ou tout du moins étouffées et ainsi l'inflammation est limitée dans le temps.

Avantageusement, la cuve externe comprend un trou d'évacuation qui présente un diamètre compris dans une plage allant de 20 mm à 50 mm. Un tel trou circulaire est aisé à réaliser.

Avantageusement, le dispositif de cuisson en extérieur comprend un capot amovible agencé pour former une enceinte fermée avec la cuve externe. L'enceinte fermée permet de former un four.

Avantageusement, le dispositif de cuisson en extérieur comprend des moyens de stockage distincts de la cuve externe, agencés pour recevoir et stocker les jus de cuisson. Typiquement, les moyens de stockage sont un bac à jus, séparé de la cuve externe. Les apports en chaleur sont limités.

La conduction de chaleur vers le bac à jus est donc faible ou nulle, et en conjonction avec la faible taille du trou d'évacuation, le rayonnement au travers du trou n'est pas suffisant pour chauffer significativement les jus de cuisson stockés dans le bac à jus.

Avantageusement, les moyens de stockage sont amovibles. Il est alors aisé de vider le bac à jus, pour éviter toute accumulation de graisses.

Avantageusement, les moyens de stockage présentent un rebord agencé à une distance prédéterminée comprise dans une plage allant de 2 mm à 10 mm d'une surface extérieure de la paroi de la cuve externe. Le bac à jus (les moyens de stockage) est donc distinct de la cuve externe, mais son rebord (typiquement une collerette ou un bord droit) est proche de la paroi, pour limiter les flux d'air et apports en oxygène, afin d'empêcher un départ de feu, ou pour étouffer des flammes en limitant les apports en comburant. Cependant, il n'y a pas de contact direct entre les moyens de stockage et la cuve externe, pour limiter les transferts de chaleur par conduction.

Avantageusement, les moyens de stockage comprennent un orifice de trop plein. Un tel orifice de trop plein permet de garantir que le trou d'évacuation ne sera jamais bloqué par un niveau haut de jus de cuisson.

Avantageusement, les moyens de stockage sont exempts d'orifice de trop plein, et le rebord est agencé à moins de 4 mm de la surface extérieure de la paroi de la cuve externe. En l'absence de trop plein, la demanderesse a trouvé judicieux de limiter encore plus le jeu entre la cuve externe et le rebord des moyens de stockage, pour limiter au maximum les apports d'air et d'oxygène.

Avantageusement, les moyens d'appui comprennent une surface d'appui agencée pour recevoir les moyens de stockage. Il n'y a pas de liaison directe entre la cuve externe et les moyens de stockage ce qui évite toute conduction de chaleur entre ces organes.

Avantageusement, les moyens de chauffage comprennent au moins une résistance électrique. En d'autres termes, il s'agit d'un appareil purement électrique, avec les moyens de chauffage constitués uniquement d'une ou plusieurs résistances électriques.

Avantageusement, les moyens de chauffage sont agencés à au moins 105 mm de la portion inférieure de la cuve externe. Cette distance permet de limiter le chauffage par rayonnement du fond de la cuve externe.

Avantageusement, les moyens de support sont agencés à au moins 10 mm des moyens de chauffage.

Avantageusement, la portion inférieure forme un tronc de cône.

Avantageusement, la paroi de la portion inférieure est inclinée à 16.5° ±3° par rapport au plan d'appui.

Avantageusement, les moyens de chauffage sont agencés directement entre la portion inférieure de la cuve externe et les moyens de support. Autrement dit, la cuve externe ne contient que les moyens de chauffage, qui sont directement au-dessus de la portion inférieure et du trou d'évacuation. Il n'y a pas de déflecteurs ou parois internes entre les moyens de chauffage et la portion inférieure. La résistance électrique est directement en regard du bac à jus, au travers du trou d'évacuation. Mais la faible taille de ce dernier et la distance avec la résistance électrique limitent le rayonnement direct sur les jus de cuissons qui ruissellent directement hors de la cuve externe.

D'autres caractéristiques et avantages de la présente invention apparaîtront plus clairement à la lecture de la description détaillée qui suit d'un mode de réalisation de l'invention donné à titre d'exemple nullement limitatif et illustré par le dessin annexé, dans lequel :

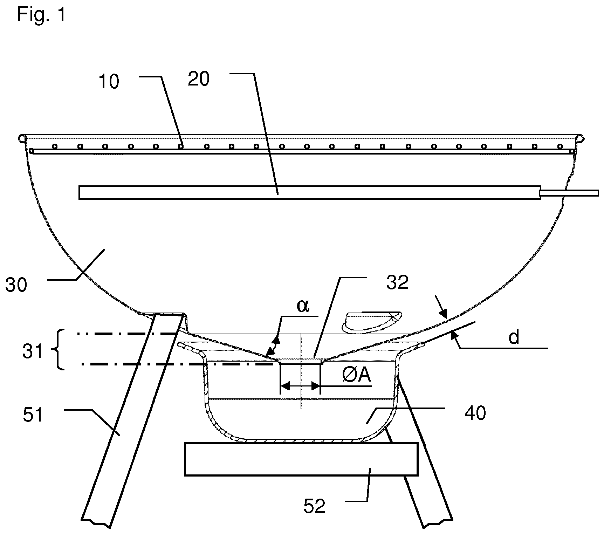

- la figure 1 représente une vue partielle d'un dispositif de cuisson en extérieur selon l'invention, en coupe.

La figure 1 représente une vue partielle d'un dispositif de cuisson en extérieur qui comprend une cuve externe 30 de forme globalement hémisphérique dans laquelle se trouvent des moyens de support 10, agencés pour recevoir des aliments à cuire, et des moyens de chauffage 20 agencés pour fournir une chaleur de cuisson.

Typiquement, les moyens de support 10 sont une grille métallique, et dans le cas représenté, les moyens de chauffage 20 sont une résistance électrique agencée sous la grille formant les moyens de support 10. Enfin, la cuve externe 30 présente ici un diamètre de 400 mm environ, choisi dans une plage pouvant aller de 250 mm à 600 mm.

Le dispositif de cuisson en extérieur peut avantageusement comprendre un capot amovible (non représenté), pour former avec la cuve externe 30 un espace de cuisson clos, c'est-à-dire un four.

Des pieds 51 sont prévus pour positionner la cuve externe 30, par rapport à un habillage par exemple en plastique ou sur le sol formant un plan d'appui.

Lors de la cuisson, des jus de cuisson sont générés par les aliments à cuire et tombent par gravité directement sur la surface interne de la paroi de la cuve externe 30. Ces jus de cuisson comprennent des graisses liquéfiées par la chaleur, et sont évacuées par un trou d'évacuation 32, ménagé dans le fond de la cuve externe 30.

Afin de limiter les risques d'inflammation des graisses contenues dans les jus de cuisson, la cuve externe présente une portion inférieure 31 où la paroi est inclinée par rapport à l'horizontale d'un angle α de 16.5°±3°. En d'autres termes, la portion inférieure de la cuve externe est en forme de tronc de cône, afin de présenter une pente suffisante pour favoriser le ruissellement et l'évacuation des jus de cuisson vers le trou d'évacuation 32. En conséquence, il n'y a pas de stagnation ni d'accumulation des jus de cuisson dans la cuve externe 30, ce qui évite de chauffer les graisses jusqu'au point d'auto-inflammation.

De plus, l'invention propose des moyens de stockage 40, formés par un bac à jus, situés sous le trou d'évacuation 32, posés sur une portion d'appui 52 solidaire des pieds 51 ou d'un habillage, et dont un rebord est à une distance (d) minimale de la cuve externe. Avantageusement, la distance (d) est comprise entre 2 mm et 10 mm. Il n'y a pas de conduction thermique entre les moyens de stockage 40 et la cuve externe 30 car il n'y a pas de contact, mais l'espace entre une collerette supérieure des moyens de stockage 40 et la cuve externe est réduit, pour limiter la circulation d'air et donc l'apport de comburant (l'oxygène de l'air). Cette mise en oeuvre limite les départs d'incendie, et/ou étouffe des flammes qui seraient présentes.

On peut prévoir un orifice de trop plein sur les moyens de stockage 40, afin de garantir que le trou d'évacuation 32 ne sera jamais obturé par un niveau élevé de résidus de cuisson (jus et morceaux). Cependant, si aucun orifice de trop plein n'est prévu, on peut réduire la distance (d) à 4 mm au maximum, pour limiter les risques d'inflammation.

Le trou d'évacuation 32 est ici circulaire et doit permettre d'évacuer les graisses liquides aussi bien que des morceaux pas encore fondus qui se détacheraient des aliments à cuire. A cet effet, on peut prévoir un ØA de 20 mm environ au minimum. Cependant, l'invention prévoit de limiter le diamètre du trou d'évacuation à 50 mm environ, idéalement entre 20 et 40 mm, pour limiter les apports d'air et d'oxygène d'une part, et d'autre part pour éviter de chauffer par rayonnement les jus de cuissons stockés dans les moyens de stockage 40. Selon une autre variante, le diamètre du trou d'évacuation est compris entre 20 et 40 mm. En conséquence, la surface de passage du trou d'évacuation est comprise entre 300 mm² et 2000 mm² environ.

Pour éviter de trop chauffer la portion inférieure 31 de la cuve externe, il est prévu de positionner les moyens de chauffage à au moins 105 mm de la portion inférieure 31, et idéalement à 125 mm ± 20mm. De plus, on peut prévoir une distance de 10 mm au minimum entre les moyens de chauffage 20 et les moyens de support 10.

En conséquence, le barbecue selon la présente invention limite les risques de départ de feu, et reste simple dans sa conception, car il n'y a pas de déflecteurs internes ou dispositifs de stockage intermédiaires des graisses.

On comprendra que diverses modifications et/ou améliorations évidentes pour l'homme du métier peuvent être apportées aux différents modes de réalisation de l'invention décrits dans la présente description sans sortir du cadre de l'invention défini par les revendications annexées.

## Revendications

1. Dispositif de cuisson en extérieur, comprenant :
- des moyens de support (10), agencés pour supporter des aliments à cuire,
- des moyens de chauffage (20), agencés pour fournir une chaleur de cuisson,
- une cuve externe (30) formée par une paroi, recevant les moyens de support (10) et les moyens de chauffage (20), et dont une surface interne de la paroi est agencée pour être exposée à des jus de cuisson,
- des moyens d'appui, agencés pour reposer sur un plan d'appui au sol, **caractérisé en ce que** la cuve externe (30) est directement exposée à des jus de cuisson provenant des aliments à cuire disposés sur les moyens de support (10) et présente une portion inférieure (31) dont la paroi est inclinée par rapport au plan d'appui d'au moins 10° pour faire ruisseler les jus de cuisson et les évacuer de la cuve externe (30).

2. Dispositif de cuisson en extérieur selon la revendication précédente, dans lequel la cuve externe (30) comprend un trou d'évacuation (32) d'une section comprise entre 300 mm² et 2000 mm².

3. Dispositif de cuisson en extérieur selon la revendication précédente, dans lequel la cuve externe (30) comprend un trou d'évacuation (32) qui présente un diamètre compris dans une plage allant de 20 mm à 50 mm.

4. Dispositif de cuisson en extérieur selon l'une des revendications précédentes, comprenant des moyens de stockage (40) distincts de la cuve externe (30), agencés pour recevoir et stocker les jus de cuisson.

5. Dispositif de cuisson en extérieur selon la revendication précédente, dans lequel les moyens de stockage (40) sont amovibles.

6. Dispositif de cuisson en extérieur selon l'une des revendications 4 ou 5, dans lequel les moyens de stockage (40) présentent un rebord agencé à une distance prédéterminée comprise dans une plage allant de 2 mm à 10 mm d'une surface extérieure de la paroi de la cuve externe (30).

7. Dispositif selon l'une des revendications 4 à 6, dans lequel les moyens de stockage (40) comprennent un orifice de trop plein.

8. Dispositif de cuisson en extérieur selon la revendication 6, dans lequel les moyens de stockage (40) sont exempts d'orifice de trop plein, et dans lequel le rebord est agencé à moins de 4 mm de la surface extérieure de la paroi de la cuve externe (30).

9. Dispositif de cuisson en extérieur selon l'une des revendications 4 à 8, dans lequel les moyens d'appui comprennent une surface d'appui agencée pour recevoir les moyens de stockage (40).

10. Dispositif de cuisson en extérieur selon l'une des revendications précédentes, dans lequel les moyens de chauffage (20) comprennent au moins une résistance électrique.

11. Dispositif de cuisson en extérieur selon l'une des revendications précédentes, dans lequel les moyens de chauffage (20) sont agencés à au moins 105 mm de la portion inférieure (31) de la cuve externe (30).

12. Dispositif de cuisson en extérieur selon l'une des revendications précédentes, dans lequel les moyens de support (10) sont agencés à au moins 10 mm des moyens de chauffage (20).

13. Dispositif de cuisson en extérieur selon l'une des revendications précédentes, dans lequel la portion inférieure (31) forme un tronc de cône.

14. Dispositif de cuisson en extérieur selon l'une des revendications précédentes, dans lequel la paroi de la portion inférieure (31) est inclinée à 16.5° ±3° par rapport au plan d'appui.

15. Dispositif de cuisson en extérieur selon l'une des revendications précédentes, dans lequel les moyens de chauffage (20) sont agencés directement entre la portion inférieure (31) de la cuve externe (30) et les moyens de support (10).
